(19) Europäisches Patentamt / European Patent Office / Office européen des brevets

(11) **EP 4 755 955 A1**

(12) **EUROPEAN PATENT APPLICATION**

(43) Date of publication:
10.06.2026 Bulletin 2026/24

(21) Application number: 25220384.9

(22) Date of filing: 03.12.2025

(51) International Patent Classification (IPC):
*C08J 5/18* (2006.01)      *B29C 48/00* (2019.01)
*B29C 61/00* (2006.01)    *C08G 63/183* (2006.01)
*C08G 63/46* (2006.01)    *C08J 11/00* (2006.01)
*C08J 3/00* (2006.01)

(52) Cooperative Patent Classification (CPC):
**C08J 5/18; B29C 61/003; C08G 63/183;
C08G 63/46; C08J 11/00;** B29C 48/0018;
B29C 48/08; B29C 48/27; C08J 3/005;
C08J 2367/02; C08J 2400/30; C08J 2467/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 06.12.2024 US 202463729255 P

(71) Applicant: **Far Eastern New Century Corporation**
**Taipei City 106428 (TW)**

(72) Inventors:
• **TSAI, Ching-Chun**
  **330052 Taoyuan City (TW)**
• **LEU, Yow-An**
  **330052 Taoyuan City (TW)**

(74) Representative: **Marks & Clerk LLP**
**15 Fetter Lane**
**London EC4A 1BW (GB)**

(54) **METHODS FOR PREPARING A POLYESTER FILM AND COMPOSITIONS THEREOF**

(57) This disclosure provides methods of preparing heat-shrinkable polyester films, wherein the heat-shrinkable polyester films are made of compositions which include recycled material. Such methods include a method for manufacturing a heat-shrinkable polyester film comprising: (a) heating the mixture comprising terephthalic acid (TPA) or dimethyl terephthalate (DMT), ethylene glycol (EG), a modifier component, and recycled material, to a temperature of from about 230°C to about 280°C to undergo esterification and to provide an esterified product; (b) passing the esterified product through a filter having a pore size of from about 5 μm to about 20 μm and at a pressure difference per hour of less than about 0.1 bar per hour; (c) heating the esterified product in the presence of a catalyst and heat stabilizer to undergo polymerization and to provide a polyester product; (d) processing the polyester product to provide a polyester resin; (e) extruding the polyester resin to provide a sheet; and (f) subjecting the sheet to a film formation process to provide the heat-shrinkable polyester film.

Processed by Luminess, 75001 PARIS (FR)

**Description**

CROSS REFERENCE TO RELATED APPLICATIONS

This application claims the benefit of priority to U.S. Provisional Patent Application No. 63/729,255 filed December 6, 2024, which is incorporated herein by reference, in its entirety for any and all purposes.

FIELD

This disclosure relates to methods for manufacturing a heat-shrinkable polyester film, wherein the heat-shrinkable polyester film is made of a composition that includes recycled material. This disclosure also relates to heat-shrinkable polyester films made by such methods.

BACKGROUND

Heat-shrinkable polyester films are widely used as disposable secondary packaging but are conventionally made from polyvinyl chloride (PVC) or oriented polystyrene (OPS). To lower the environmental impact of such products, there has been growing interest to prepare these films using recycled materials. Heat-shrinkable polyester films are an attractive option as these films may be prepared from recycled polyethylene terephthalate (PET) materials.

However, using recycled PET materials introduce impurities and foreign matter. The sources of these impurities and foreign matter include material labels that are inadvertently incorporated with the recycled material (such as PVC PP, PE, paper labels) and external pollutants (such as dust, sediment, glass, wood chips, etc.). Also, other impurities (such as gel and carbonized material) are a result from the degradation of other plastics (e.g., PVC, PP, PE) during reprocessing and heating during plastic processing. Since impurities and foreign matter cannot be completely removed from the recycled material, the resulting film made from the recycled material may contain large particles, which cause unevenness of the film's surface and negatively impact film printing and coloring. Thus, there remains a need to provide heat-shrinkable polyester films having significantly low particle pollution, thereby providing heat-shrinkable polyester films with excellent printability.

This disclosure provides methods for producing heat-shrinkable polyester films having significant low particle content. Such films have excellent printability, high shrinkage, low haze, high gloss, and high processability, and the filters used in making these films have a better and longer lifecycle.

SUMMARY

Provided in one aspect is a heat-shrinkable polyester film comprising a polyester resin composition comprising:

(i) terephthalic acid (TPA) or dimethyl terephthalate (DMT)
(ii) ethylene glycol (EG),
(iii) a modifier component, and
(iv) recycled material,

wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

In some embodiments, the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol. In some embodiments, the modifier component comprises one or more of neopentyl glycol and 2-methyl-1,3-propanediol.

In some embodiments, the modifier component comprises neopentyl glycol, and the polyester resin composition comprises from about 15 mol% to about 40 mol% of neopentyl glycol. In some embodiments, the polyester resin composition comprises from about 20 mol% to about 30 mol% of neopentyl glycol.

In some embodiments, the modifier component comprises 2-methyl-1,3-propanediol, and the polyester resin composition comprises from about 15 mol% to about 40 mol% of 2-methyl-1,3-propanediol. In some embodiments, the polyester resin composition comprises from about 20 mol% to about 30 mol% of 2-methyl-1,3-propanediol.

In some embodiments, the heat-shrinkable polyester film has an intrinsic viscosity of greater than or equal to about 0.55 dl/g. In some embodiments, the heat-shrinkable polyester film has an intrinsic viscosity of from about 0.55 dl/g to about 0.75 dl/g, preferably from about 0.65 dl/g to about 0.70 dl/g.

In some embodiments, the heat-shrinkable polyester film has an acid value of from about 15 eq/t to about 40 eq/t. In some embodiments, the heat-shrinkable polyester film has an acid value of about 20 eq/t.

In some embodiments, the heat-shrinkable polyester film has a coefficient of friction of from about 0.2 to about 0.5. In some embodiments, the heat-shrinkable polyester film has a coefficient of friction of from about 0.3 to about 0.4.

In some embodiments, the heat-shrinkable polyester film has a haze of less than about 10%. In some embodiments, the heat-shrinkable polyester film has a haze of less than about 5%.

In some embodiments, the heat-shrinkable polyester film has a gloss of greater than about 100GU. In some embodiments, the heat-shrinkable polyester film has a gloss of about 130 GU to about 160 GU.

In some embodiments, the heat-shrinkable polyester film has a total light transmittance of about 80% to about 95%.

In some embodiments, the heat-shrinkable polyester film has a shrinkage in the transverse direction of greater than about 55% after immersing the heat-shrinkable polyester film at about 95°C for about 10 seconds.

In some embodiments, the heat-shrinkable polyester film has a shrinkage in the machine direction of less than about 5% after immersing the heat-shrinkable polyester film at about 95°C for about 10 seconds.

In some embodiments, the recycled material comprises polyethylene terephthalate (PET) recycled material in flake form or chip form.

In some embodiments, the heat-shrinkable polyester film comprises about 1 wt% to about 80 wt% recycled material, based on a total weight of the heat-shrinkable polyester film polyester film. In some embodiments, the heat-shrinkable polyester film comprises about 1 wt% to about 60 wt% recycled material, based on the total weight of the heat-shrinkable polyester film polyester film.

In some embodiments, the heat-shrinkable polyester film has a benzene content of less than about 500 ppb.

Provided in one aspect is a polyester product comprising:

    (i) terephthalic acid (TPA) or dimethyl terephthalate (DMT)
    (ii) ethylene glycol (EG),
    (iii) a modifier component, and
    (iv) recycled material.

In some embodiments, the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol. In some embodiments, the modifier component comprises one or more of neopentyl glycol and 2-methyl-1,3-propanediol.

In some embodiments, the modifier component comprises neopentyl glycol, and the polyester product comprises from about 15 mol% to about 40 mol% of neopentyl glycol. In some embodiments, the polyester product comprises from about 20 mol% to about 30 mol% of neopentyl glycol.

In some embodiments, the modifier component comprises 2-methyl-1,3-propanediol, and the polyester product comprises from about 15 mol% to about 40 mol% of 2-methyl-1,3-propanediol. In some embodiments, the polyester product comprises from about 20 mol% to about 30 mol% of 2-methyl-1,3-propanediol.

In some embodiments, the polyester product has an intrinsic viscosity of from about 0.58 dl/g to about 0.80 dl/g. In some embodiments, the polyester product has an intrinsic viscosity of from about 0.65 dl/g to about 0.75 dl/g.

In some embodiments, the polyester product has an acid value of from about 10 eq/t to about 50 eq/t. In some embodiments, the polyester product has an acid value of from about 20 eq/t to about 35 eq/t.

In some embodiments, the recycled material comprises polyethylene terephthalate (PET) recycled material in flake form or chip form.

In some embodiments, the polyester product comprises about 1 wt% to about 80 wt% recycled material, based on a total weight of the polyester product. In some embodiments, the polyester product comprises about 1 wt% to about 60 wt% recycled material, based on the total weight of the polyester product.

In some embodiments, the polyester product has less than about 100 particles per a region, wherein the particles are counted on a sheet form of the polyester product, wherein the region has a surface area of 1 $mm^2$ and a thickness of 200 $\mu m$, and wherein the particles have a diameter of greater than about 20 $\mu m$. In some embodiments, the polyester product has less than about 150 particles per a region, wherein the particles are counted on a sheet form of the polyester product, wherein the region has a surface area of 1 $mm^2$ and a thickness of 1 mm, and wherein the particles have a diameter of greater than about 20 $\mu m$.

Provided in another aspect is a method for manufacturing a heat-shrinkable polyester film comprising:

    (a) heating a mixture comprising terephthalic acid (TPA) or dimethyl terephthalate (DMT), ethylene glycol (EG), a modifier component, and recycled material, to a temperature of from about 230°C to about 280°C to undergo esterification and to provide an esterified product;
    (b) passing the esterified product through a filter having a pore size of from about 5 $\mu m$ to about 20 $\mu m$ and at a pressure difference per hour of less than about 0.1 bar per hour;

(c) heating the esterified product in the presence of a catalyst and heat stabilizer to undergo polymerization and to provide a polyester product;

(d) processing the polyester product to provide a polyester resin;

(e) extruding the polyester resin to provide a sheet; and

(f) subjecting the sheet to a film formation process to provide the heat-shrinkable polyester film,

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,

wherein the esterified product has a viscosity of less than about 1500 poise, and

wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

Provided in another aspect is a method for manufacturing a polyester product comprising:

(a) heating a mixture comprising terephthalic acid (TPA) or dimethyl terephthalate (DMT), ethylene glycol (EG), a modifier component, and recycled material to a temperature of from about 230°C to about 280°C to undergo esterification and to provide an esterified product;

(b) passing the esterified product through a filter having a pore size of from about 5 microns to about 20 microns and at a pressure difference per hour of less than about 0.1 bar per hour; and

(c) heating the esterified product in the presence of a catalyst and heat stabilizer to undergo polymerization and to provide a polyester product;

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,

wherein the esterified product has a viscosity of less than about 1500 poise.

In some embodiments, the washing material is pure polypropylene.

In some embodiments, in step a) the mixture is heated at a temperature of about 230°C to about 280°C. In some embodiments, in step a) the mixture is heated at a temperature of about 240°C to about 270°C, preferably about 245°C to about 265°C.

In some embodiments, in step b) the filter has a pore size of about 5 microns. In some embodiments, in step b) the pressure difference per hour is less than 0.085 per hour.

In some embodiments, wherein in step c) the esterified product is heated at a temperature of about 240°C to about 290°C. In some embodiments, in step c) the esterified product is heated at a temperature of about 250°C to about 280°C, preferably about 255°C to about 275°C

In some embodiments, in step c) the polyester product reaches an intrinsic viscosity (IV) of greater than about 0.58 dL/g. In some embodiments, in step c) the polyester product reaches an intrinsic viscosity (IV) of from about 0.58 dL/g to about 0.80 dL/g, preferably from about 0.65 dL/g to about 0.75 dL/g.

In some embodiments, in step c) the polyester product has a viscosity of from about 200 poise to about 1500 poise. In some embodiments, in step c) the polyester product has a viscosity of from about 200 poise to about 1000 poise, preferably from about 200 poise to about 800 poise.

In some embodiments, the recycled material has a pressure difference of from about 0.1 bar to about 25 bar.

In some embodiments, in step d) wherein processing comprises granulating or pelletizing. In some embodiments, in step e) wherein extruding is at a temperature of from about 230°C to about 280°C.

In some embodiments, the polyester product has less than about 100 particles per a region, wherein the particles are counted on a sheet form of the polyester product, wherein the region has a surface area of 1 mm$^2$ and a thickness of 200 $\mu$m, and wherein the particles have a diameter of greater than about 20 $\mu$m. In some embodiments, the polyester product has less than about 150 particles per a region, wherein the particles are counted on a sheet form of the polyester product, wherein the region has a surface area of 1 mm$^2$ and a thickness of 1 mm, and wherein the particles have a diameter of greater than about 20 $\mu$m.

Provided in another aspect is a polyester product prepared by any one of the methods described herein.

BRIEF DESCRIPTION OF THE DRAWINGS

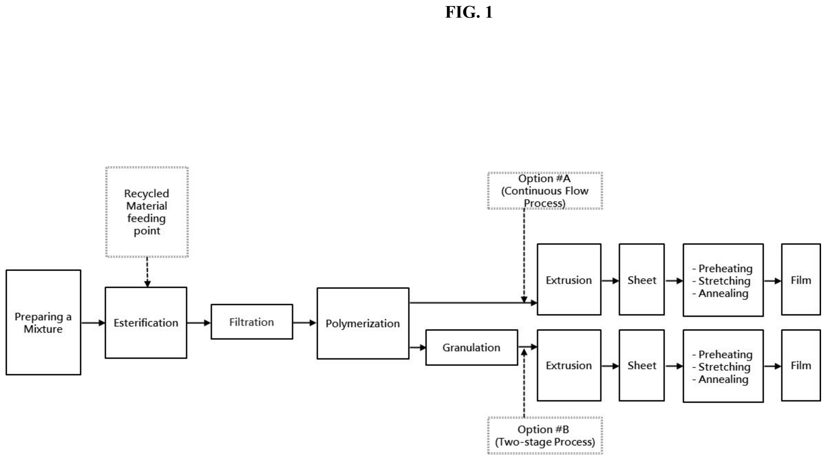

FIG. 1 illustrates a flowchart of the methods for making heat-shrinkable polyester films as described herein.

DETAILED DESCRIPTION

This disclosure provides methods for producing heat-shrinkable polyester films containing recycled material and having low particle content (particle contaminants having a diameter that is greater than about 20 $\mu$m). The heat-shrinkable polyester films prepared in accordance with the methods described herein have excellent printability, high shrinkage, low haze, high gloss, and high processability, and the filters used in making these films have a better and longer lifecycle.

FIG. 1 illustrates the methods for making heat-shrinkable polyester films as described herein. In some embodiments, a mixture comprising terephthalic acid (TPA) or dimethyl terephthalate (DMT), ethylene glycol (EG), a modifier component (e.g., neopentyl glycol (NPG) and 2-methyl-1,3-propanediol (MPDO)), and recycled material is prepared. The mixture is heated to undergo esterification and to provide an esterified product. The esterified product is passed through a filter having a pore size of from about 5 $\mu$m to about 20 $\mu$m and at a pressure difference per hour of less than about 0.1 bar per hour. The esterified product is then heated in the presence of a catalyst (e.g., antimony glycol) and a heat stabilizer (e.g., trimethyl phosphate) to undergo polymerization and to provide a polyester product (e.g., polyester melt).

As shown in in Option B of FIG.1 (also referred as the "two-stage process"), the polyester product (e.g., polyester melt) may be cooled in some embodiments and processed (e.g., granulated) to provide the polyester resin composition. Such processes are referred to as a "two-stage process." For such methods, the polyester resin compositions are further remelted during the extrusion process to provide a sheet. In some embodiments, the polyester resin composition are not cooled to a temperature of from about 10°C to about 80°C. In some embodiments, the polyester resin composition is not cooled to a temperature of from about 15°C to about 60°C, including from about 20°C to about 30°C. The sheet is then subjected to a film formation process to provide the heat-shrinkable polyester film.

As shown in Option A of FIG.1 (also referred as the "continuous process"), in some embodiments, the polyester melt is not cooled and granulated to provide the polyester resin composition. In such embodiments, the polyester melt is subjected to the extruding step to provide the sheet. Such processes are referred to as a continuous flow process as this allows for a seamless film production. Thus, the polyester products (polyester melts) described herein may be directly extruded to provide the polyester sheet.

To minimize the particle contaminants (those having a diameter that is greater than about 20 $\mu$m) in the heat-shrinkable polyester films, the methods described herein utilize the following steps: (i) limiting the feeding of the recycled materials to the beginning of the manufacturing process to the mixture; (ii) passing the esterified product through a filter having a specific pore size (e.g., about 5 $\mu$m to about 20 $\mu$m); (iii) the esterified product having a viscosity of less than about 1500 poise; (iv) a filter having a pore size of from about 5 $\mu$m to about 20 $\mu$m and is at a pressure difference per hour of less than about 0.1 bar per hour as further explained below, and optionally, (v) the recycled material having a pressure difference of less than 25 bar when applied to the following equation as explained in further detailed below. Also, for embodiments wherein the mixture comprises neopentyl glycol, the amount of neopentyl glycol is also important, wherein polyester films have a neopentyl glycol molar percentage of about 15 mol% to about 40 mol%, assuming that the total diol molar percentage is about 100 mol%. These features for making the heat-shrinkable polyester films as described herein are illustrated in the Examples. Comparative examples are also provided.

For the methods described herein, the filter used herein operate under the following conditions: the esterified product with a suitable temperature (about 256°C), a dynamic viscosity of less than about 1500 poise, and a suitable flow (e.g. a flow of 3000kg/hr) is injected through a filter using a melting pump. The filter has a pore size of from about 5 to about 20 $\mu$m and has a candle-type (rod-shaped) structure, with a filtration area of 100 m$^2$. At the initial time ($T_0$), the inlet pressure is $P_{t0}$, and after 24 hours ($T_{24}$), the inlet pressure is $P_{t24}$. Within 24 hours, the pressure rise rate (slope of $P_{t24}$-$P_{t0}$) is less than 0.1 bar per hour. Specific criteria for evaluation of the inlet pressure include: (1) if $P_{t0}$ exceeds 2 bar at $T_0$, the initial pressure value is too high, and (2) if $P_{t24}$ exceeds 5 bar at $T_{24}$, such pressure is also too high, where both high pressures will cause the filter to be replaced often, meaning poor filter performance. In the methods described herein, the filter's pressure rise rate ($\Delta$P/Hour) is assessed: where a rate greater than 0.1 indicates rapid pressure increase and short filter life, a rate between 0.085 and 0.1 indicates slightly faster pressure increase, posing a risk to filter life, and a rate below 0.07 indicates gradual pressure increase, suggesting long filter life.

For the methods described herein, the quality of the recycled material is assessed by measuring the pressure difference of P2 and P1 and is described in the Testing Procedures section. The recycled material used herein has a pressure difference of less than 25 bar when applied to the following:

$$P2 - P1,$$

wherein P1 is the baseline pressure of a washing material (such as a single thermoplastic material comprising polypropylene (PP), polyethylene (PE), or polyethylene terephthalate (PET) and is clean and pure from any other materials or impurities) when the washing material is passed through a 14 micron filter and P2 is the plateau pressure (where the pressure is at the plateau point) of the washing material after the addition and depletion of about 1 kilogram of recycled material when passed through a 14 micron filter. In some embodiments, the recycled material has a pressure difference of from about 0 bar to about 25 bar, including about 0.5 bar, about 1 bar, about 5 bar, about 10 bar, about 15 bar, about 20 bar, and about 25 bar. In some embodiments, the washing material is pure polypropylene (PP), pure polyethylene (PE), or pure polyethylene terephthalate (PET). In some embodiments, the washing material is pure polypropylene.

As shown above the viscosity of the esterified product is measured in poise. As used herein, when the unit of measure for viscosity is in "poise," then viscosity refers to dynamic viscosity. Dynamic viscosity represents the ratio of a fluid's shear stress to its velocity gradient and is a fluid's internal flow resistance. As used herein, when the unit of measure for viscosity is in "dl/g", then viscosity refers to intrinsic viscosity. Intrinsic viscosity is a measure of solute's contribution to the viscosity of a solution.

**Heat-Shrinkable Polyester Films**

Provided in one aspect is a heat-shrinkable polyester film comprising a polyester resin composition comprising:

    (i) a dicarboxylic component,
    (ii) a diol component
    (iii) optionally, a modifier component, and
    (iv) recycled material,

wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

The dicarboxylic acid component may include one or more diacarboxylic acid monomers or derivatives thereof (e.g., diester monomers). Examples of dicarboxylic acid monomers or derivatives thereof include, but are not limited to, terephthalic acid, dimethyl terephthalate (DMT), isophthalic acid (IPA), 1,4-cyclohexanedicarboxylic acid (1,4-CHDA), oxalic acid, succinic acid, adipic acid (AA), sebacic acid, azalaic acid, 1,4-naphthalenedicarboxylic acid, 2,5-furandicarboxylic acid (FDCA), 1,3-cyclohexane dicarboxylic acid, butanedioic acid, hexanedioic acid, decanedioic acid, and combinations thereof. These dicarboxylic acid monomer or derivatives thereof may be used alone or in admixture of two or more. In some embodiments, the dicarboxylic acid component comprises terephthalic acid (TPA). In some embodiments, the dicarboxylic acid component comprises dimethyl terephthalate (DMT).

The diol component may include any one or more diol monomers. Examples of the diol monomers include, but are not limited to, ethylene glycol (EG), neopentyl glycol (NPG), 1,3-propanediol, butanediol, 1,5-pentanediol, 2-methyl-1,3-propanediol (MPDO), 2,2-diethyl-1,3-propanediol, 2-butyl-2-ethyl-1,3-propanediol (BEPD), 1,6-hexanediol, 1,4-cyclohexanedimethanol (CHDM), diethylene glycol (DEG), triethylene glycol (TEG), polyethylene glycol (PEG), polypropylene glycol (PPG), polybutylene glycol, poly(tetramethylene ether) glycol (PTMEG), 1,10-decandiol, 2,3-dimethyl-2,3-butanediol, 2-[2-(2-hydroxyethoxy)ethoxy]ethanol, propylene glycol, 1,2-cyclohexane-dimethanol, 1,3-cyclohexane-dimethanol, tetramethyl cyclobutanediol, isosorbide, and combinations thereof. These diol monomers may be used alone or in admixture of two or more. In some embodiments, the diol component comprises ethylene glycol (EG) and neopentyl glycol (NPG). In some embodiments, the diol component comprises ethylene glycol (EG) and 2-methyl-1,3-propanediol (MPDO). In some embodiments, the diol component comprises ethylene glycol (EG) and 1,4-cyclohexanedimethanol (CHDM). In some embodiments, the diol component comprises ethylene glycol (EG), neopentyl glycol (NPG), and diethylene glycol (DEG). In some embodiments, the diol component comprises ethylene glycol (EG), 1,4-cyclohexanedimethanol (CHDM), and diethylene glycol (DEG). In some embodiments, the diol component comprises ethylene glycol (EG), neopentyl glycol (NPG) and butanediol.

The polyester resin compositions described herein may comprise a modifier component. The modifier component may include one or more dicarboxylic acid monomers or derivatives thereof, diol monomers, and polyol monomers (e.g., triol or tetrol monomers and not including diol monomers). Examples of polyols include, but are not limited to, trimethylolmethane, trimethylolethane, trimethylolpropane, pentaerythritol, propane-1,2,3-triol, 1,2,6-hexanetriol, and combinations thereof. These polyols may be used alone or in admixture of two or more.

The polyester resin compositions described herein may comprise a dicarboxylic acid component, a diol component, optionally, a modifier component, and optionally, recycled material. In some embodiments, the polyester resin compositions comprise a dicarboxylic acid component and a diol component. In some embodiments, the polyester resin compositions comprise a dicarboxylic acid component, a diol component, and recycled material. In some embodiments, the polyester resin compositions comprise a dicarboxylic acid component, a diol component, and a modifier component. In some embodiments, the polyester resin composition comprise a dicarboxylic acid component, a diol component, a modifier component, and recycled material.

In some embodiments, the polyester resin composition described herein may comprise terephthalic acid (TPA) or dimethyl terephthalate (DMT), ethylene glycol (EG), and a modifier component (e.g., any one of the diol monomers or polyol monomers described herein). The modifier component may comprise one or more of neopentyl glycol, 2-methyl-1,3-propanediol, 1,4-cyclohexanedimethanol, diethylene glycol, and butanediol. In some embodiments, the modifier component comprises one or more of neopentyl glycol and 2-methyl-1,3-propanediol.

In some embodiments, the polyester resin composition comprises terephthalic acid (TPA), ethylene glycol (EG), and neopentyl glycol (NPG). In some embodiments, the polyester resin composition comprises dimethyl terephthalate (DMT), ethylene glycol (EG), and neopentyl glycol (NPG). In some embodiments, the polyester resin composition comprises terephthalic acid (TPA), ethylene glycol (EG), and 2-methyl-1,3-propanediol (MPDO). In some embodiments, the polyester resin composition comprises terephthalic acid (TPA), ethylene glycol (EG), and 1,4-cyclohexanedimethanol (CHDM). In some embodiments, the polyester resin composition comprises terephthalic acid (TPA), ethylene glycol (EG), neopentyl glycol (NPG), and diethylene glycol (DEG). In some embodiments, the polyester resin composition comprises terephthalic acid (TPA), ethylene glycol (EG), 1,4-cyclohexanedimethanol (CHDM), and diethylene glycol (DEG). In some embodiments, the polyester resin composition comprises terephthalic acid (TPA), ethylene glycol (EG), neopentyl glycol (NPG), and butanediol.

Provided in one aspect is a heat-shrinkable polyester film comprising a polyester resin composition comprising:

(i) terephthalic acid (TPA) or dimethyl terephthalate (DMT);
(ii) ethylene glycol (EG);
(iii) a modifier component, and
(iv) recycled material,

wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

In some embodiments, when the polyester resin composition comprises neopentyl glycol, the polyester film has a neopentyl glycol molar percentage of about 15 mol% to about 40 mol%, based on the total diol molar percentage is about 100 mol%, including about 15 mol%, about 20 mol%, about 25 mol%, about 30 mol%, about 35 mol% and about 40 mol%, based on the total diol molar percentage is about 100 mol%. For instance, for a mixture comprising terephthalic acid (TPA), ethylene glycol (EG), and neopentyl glycol (NPG), the total diol molar percentage is the sum of the neopentyl glycol molar percentage and ethylene glycol molar percentage. For embodiments, wherein the mixture comprises terephthalic acid (TPA), ethylene glycol (EG), neopentyl glycol (NPG), and diethylene glycol (DEG), the total diol molar percentage is the sum of the ethylene glycol molar percentage, neopentyl glycol molar percentage, and diethylene glycol molar percentage. For embodiments, wherein the mixture comprises terephthalic acid (TPA), ethylene glycol (EG), neopentyl glycol (NPG), and butanediol, the total diol molar percentage is the sum of the ethylene glycol molar percentage, neopentyl glycol molar percentage, and butanediol molar percentage. In some embodiments, the polyester film has a neopentyl glycol molar percentage of neopentyl glycol of about 15 mol% to about 25 mol%, based on the total diol molar percentage is about 100 mol%.

Provided in another aspect is a heat-shrinkable polyester film comprising a polyester resin composition comprising:

(i) about 70 mol% to about 100 mol% of terephthalic acid and/or dimethyl terephthalate,
(ii) about 50 mol% to about 84 mol% of ethylene glycol,
(iii) optionally, a modifier component, and
(iv) recycled material,

wherein the amount for component (i) is based on the total diacid molar percentage;

wherein the amounts for component (ii) is based on the total diol molar percentage; and

wherein the heat-shrinkable polyester film has less than or equal to about 10 particles per a region, wherein the region has a surface area of 1 mm$^2$ and a thickness of 40 μm, and wherein the particles have a diameter of greater than about 20 μm.

The heat-shrinkable polyester films described herein may comprise a modifier component. The modifier component may comprise one or more of neopentyl glycol, 2-methyl-1,3-propanediol, 1,4-cyclohexanedimethanol, diethylene glycol, and butanediol. In some embodiments, the modifier component comprises one or more of neopentyl glycol and 2-methyl-1,3-propanediol. In some embodiments, the modifier component comprises neopentyl glycol. In some embodiments, the modifier component comprises 2-methyl-1,3-propanediol. In some embodiments, the polyester resin composition comprises from about 0 mol% to about 30 mol% of a modifier component if the modifier component comprises a diacid. In some embodiments, the polyester resin composition comprises from about 16 mol% to about 50 mol% of a modifier component if the modifier component comprises a diol. In some embodiments, the polyester resin composition comprises simultaneously about 0 mol% to about 30 mol% of a modifier component comprising a diacid and about 16 mol% to about 50 mol% of a modifier component comprising a diol.

The heat-shrinkable polyester films described herein may have neopentyl glycol as the modifier component. For such embodiments, the polyester resin composition comprises from about 15 mol% to about 40 mol% of neopentyl glycol, based on the total diol molar percentage is about 100 mol%, including about 15 mol%, about 20 mol%, about 25 mol%, about 30 mol%, about 35 mol%, about 40 mol%, based on the total diol molar percentage is about 100 mol%. In some embodiments, the polyester resin composition comprises from about 20 mol% to about 30 mol% of neopentyl glycol, based on the total diol molar percentage is about 100 mol%.

The heat-shrinkable polyester films described herein may have 2-methyl-1,3-propanediol as the modifier component. For such embodiments, the polyester resin composition comprises from about 15 mol% to about 40 mol% of 2-methyl-1,3-propanediol, based on the total diol molar percentage is about 100 mol%, including about 15 mol%, about 20 mol%, about 25 mol%, about 30 mol%, about 35 mol%, about 40 mol%, based on the total diol molar percentage is about 100 mol%. In some embodiments, the polyester resin composition comprises from about 20 mol% to about 30 mol% of 2-methyl-1,3-propanediol, based on the total diol molar percentage is about 100 mol%.

In some embodiments, the heat-shrinkable polyester film has an intrinsic viscosity of greater than about or equal to 0.55 dl/g. In some embodiments, the heat-shrinkable polyester film has an intrinsic viscosity of from about 0.55 dl/g to about 0.75 dl/g, including about 0.55 dl/g, about 0.65 dl/g, about 0.70 dl/g, and about 0.75 dl/g. In some embodiments, the heat-shrinkable polyester film has an intrinsic viscosity of from about 0.65 dl/g to about 0.70 dl/g.

In some embodiments, the heat-shrinkable polyester film has an acid value of from about 15 eq/t to about 40 eq/t, including about 15 eq/t, about 20 eq/t, about 25 eq/t, about 30 eq/t, about 35 eq/t, and about 40 eq/t. In some embodiments, the heat-shrinkable polyester film has an acid value of about 20 eq/t.

In some embodiments, the heat-shrinkable polyester film has a coefficient of friction of from about 0.2 to about 0.5, including about 0.2, about 0.25, about 0.3, about 0.35, about 0.4, about 0.45, and about 0.5. In some embodiments, the heat-shrinkable polyester film has a coefficient of friction of from about 0.3 to about 0.4.

In some embodiments, the heat-shrinkable polyester film has a haze of less than about 10%, including less than about 9.5%, less than about 9%, less than about 8.5%, less than about 8%, less than about 7.5%, less than about 7%, less than about 6.5%, less than about 6%, less than about 5.5%, less than about 5%, less than about 4.5%, less than about 4%, including less than about 3.5%, less than about 3%, less than about 2.5%, less than about 2%, less than about 1.5%, less than about 1%, and less than about 0.5%. In some embodiments, the heat-shrinkable polyester film has a haze of less than about 5%. The heat-shrinkable polyester films described herein have a haze of from about 1% to about 10%. In some embodiments, the heat-shrinkable polyester films described herein have a haze of from about 1% to about 5%. In some embodiments, the heat-shrinkable polyester films described herein have a haze of from about 1% to about 4%.

The heat-shrinkable polyester films described herein have a gloss of greater than about 100GU. In some embodiments, the heat-shrinkable polyester film has a gloss of about 100 GU to about 160GU, including about 100 GU, about 110 GU, about 120 GU, about 130 GU, about 140 GU, about 150 GU, and about 160 GU. In some embodiments, the heat-shrinkable polyester film has a gloss of about 130 GU to about 160 GU. In some embodiments, the heat-shrinkable polyester film has a gloss of about 140 GU to about 160 GU.

The heat-shrinkable polyester films described herein have a total light transmittance of about 80% to about 95%, including about 80%, about 81%, about 82%, about 83%, about 84%, about 85%, about 86%, about 87%, about 88%, about 89%, about 90%, about 91%, about 92%, about 93%, about 94%, and about 95%. In some embodiments, the heat-shrinkable polyester film has a total light transmittance of about 85% to about 95%. In some embodiments, the heat-shrinkable polyester film has a total light transmittance of about 90% to about 95%.

The heat-shrinkable polyester films described herein have a heat shrinkage in the transverse direction of greater than about 55% after immersing the heat-shrinkable polyester film at about 95°C for about 10 seconds. In some embodiments, the heat-shrinkable polyester films described herein have a heat shrinkage in the transverse direction of about 50% to about 80% after immersing the heat-shrinkable polyester film at about 95°C for about 10 seconds.

The heat-shrinkable polyester films described herein have a heat shrinkage in the machine direction of less than about 5% after immersing the heat-shrinkable polyester film at about 95°C for about 10 seconds. The heat-shrinkable polyester films described herein have a heat shrinkage in the machine direction of about -5% to about 5% after immersing the heat-shrinkable polyester film at about 95°C for about 10 seconds.

In some embodiments, the recycled material comprises polyethylene terephthalate (PET) recycled material in flake form or chip form.

In some embodiments, the heat-shrinkable polyester film comprises about 1 wt% to about 80 wt% recycled material, based on a total weight of the heat-shrinkable polyester film, including about 1 wt%, about 5 wt%, about 10 wt%, about 15 wt%, about 20 wt%, about 25 wt%, about 30 wt%, about 35 wt%, about 40 wt%, about 45 wt%, about 50 wt%, about 55 wt%, about 60 wt%, about 65 wt%, about 70 wt%, about 75 wt%, and about 80 wt%. In some embodiments, the heat-shrinkable polyester film comprises about 1 wt% to about 60 wt% recycled material, based on the total weight of the heat-shrinkable polyester film.

The heat-shrinkable polyester films described herein may have a benzene content of less than about 500 ppb, including less than about 450 ppb, less than about 400 ppb, less than about 350 ppb, less than about 300 ppb, less than about 250 ppb, less than about 200 ppb, less than about 150 ppb, less than about 100 ppb, less than about 50 ppb, less than about 25 ppb, less than about 15 ppb, less than about 10 ppb, or less than about 5 ppb. In some embodiments, the heat-shrinkable polyester film has a benzene content of greater than about 0 ppb and less than about 500 ppb. In some embodiments, the heat-shrinkable polyester film has a benzene content of greater than about 5 ppb and less than about 500 ppb.

The heat-shrinkable polyester films described herein have a benzene content of from about 0 ppb to about 500 ppb or from about 5 ppb to about 500 ppb, including about 0 ppb, about 5 ppb, about 10 ppb, about 15 ppb, about 20 ppb, about 30 ppb, about 40 ppb, about 50 ppb, about 100 ppb, about 150 ppb, about 200 ppb, about 250 ppb, about 300 ppb, about 350 ppb, about 400 ppb, about 450 ppb, and about 500 ppb. In some embodiments, the heat-shrinkable polyester film has a benzene content of about 5 ppb to about 100 ppb.

In any of the embodiments described herein, the heat-shrinkable polyester films described herein may have from about 0 to about 10 particles per a region, wherein the region has a surface area of 1 mm$^2$ and a thickness of 40 $\mu$m, and wherein the particles have a diameter of greater than about 20 $\mu$m.

## Polyester Products

Also described herein are the polyester products obtained from the methods described herein. Polyester products are referenced herein refer to the polyester product that is obtained after polymerization and can refer to either the polyester melt or polyester resin composition.

Provided in one aspect is a polyester product comprising:

    (i) a dicarboxylic component,
    (ii) a diol component
    (iii) optionally, a modifier component, and
    (iv) recycled material.

Provided in another aspect is a polyester product comprising:

    (i) terephthalic acid (TPA) or dimethyl terephthalate (DMT);
    (ii) ethylene glycol (EG);
    (iii) a modifier component, and
    (iv) recycled material.

In some embodiments, when the polyester product comprises neopentyl glycol, the polyester product comprises from about 15 mol% to about 40 mol% of neopentyl glycol, based on the total diol molar percentage is about 100 mol%, including about 15 mol%, about 20 mol%, about 25 mol%, about 30 mol%, about 35 mol%, about 40 mol%, based on the total diol molar percentage is about 100 mol%. In some embodiments, the polyester product comprises from about 20 mol% to about 30 mol% of neopentyl glycol, based on the total diol molar percentage is about 100 mol%. For instance, for a mixture comprising terephthalic acid (TPA), ethylene glycol (EG), and neopentyl glycol (NPG), the total diol molar percentage is the sum of the neopentyl glycol molar percentage and ethylene glycol molar percentage.

In some embodiments, when the polyester product comprises 2-methyl-1,3-propanediol, the polyester product comprises from about 15 mol% to about 40 mol% of 2-methyl-1,3-propanediol, based on the total diol molar percentage is about 100 mol%, including about 15 mol%, about 20 mol%, about 25 mol%, about 30 mol%, about 35 mol%, about 40 mol%, based on the total diol molar percentage is about 100 mol%. In some embodiments, the polyester product comprises from about 20 mol% to about 30 mol% of 2-methyl-1,3-propanediol, based on the total diol molar percentage is about 100 mol%. For instance, for a mixture comprising terephthalic acid (TPA), ethylene glycol (EG), and 2-methyl-1,3-propanediol (MPDO), the total diol molar percentage is the sum of the 2-methyl-1,3-propanediol molar percentage and ethylene glycol molar percentage.

In some embodiments, the polyester product has an intrinsic viscosity of from about 0.58 dl/g to about 0.80 dl/g, including about 0.58 dl/g, about 0.60 dl/g, about 0.65 dl/g, about 0.70 dl/g, about 0.75 dl/g, and about 0.80 dl/g. In some embodiments, the polyester product has an intrinsic viscosity of from about 0.65 dl/g to about 0.75 dl/g.

In some embodiments, the polyester product has an acid value of from about 10 eq/t to about 50 eq/t, including about 10 eq/t, about 15 eq/t, about 20 eq/t, about 25 eq/t, about 30 eq/t, about 35 eq/t, about 40 eq/t, about 45 eq/t and about 50 eq/t. In some embodiments, the polyester product has an acid value of about 20 eq/t to about 35 eq/t.

In some embodiments, the recycled material comprises polyethylene terephthalate (PET) recycled material in flake form or chip form.

In some embodiments, the polyester product comprises about 1 wt% to about 80 wt% recycled material, based on a total weight of the polyester film, including about 1 wt%, about 5 wt%, about 10 wt%, about 15 wt%, about 20 wt%, about 25 wt%, about 30 wt%, about 35 wt%, about 40 wt%, about 45 wt%, about 50 wt%, about 55 wt%, about 60 wt%, about 65 wt%, about 70 wt%, about 75 wt%, and about 80 wt%. In some embodiments, the polyester product comprises about 1 wt% to about 60 wt% recycled material, based on the total weight of the polyester product.

The polyester products described herein may have a benzene content of less than about 500 ppb, including less than about 450 ppb, less than about 400 ppb, less than about 350 ppb, less than about 300 ppb, less than about 250 ppb, less than about 200 ppb, less than about 150 ppb, less than about 100 ppb, less than about 50 ppb, less than about 25 ppb, less than about 15 ppb, less than about 10 ppb, or less than about 5 ppb. In some embodiments, the polyester product has a benzene content of greater than about 0 ppb and less than about 500 ppb. In some embodiments, the polyester product has a benzene content of greater than about 5 ppb and less than about 500 ppb.

The polyester product described herein have a benzene content of from about 0 ppb to about 500 ppb or from about 5 ppb to about 500 ppb, including about 0 ppb, about 5 ppb, about 10 ppb, about 15 ppb, about 20 ppb, about 30 ppb, about 40 ppb, about 50 ppb, about 100 ppb, about 150 ppb, about 200 ppb, about 250 ppb, about 300 ppb, about 350 ppb, about 400 ppb, about 450 ppb, and about 500 ppb. In some embodiments, the polyester product has a benzene content of about 5 ppb to about 100 ppb.

The polyester products described herein may have less than about 100 particles per a region, wherein the particles are counted on a sheet form of the polyester product, wherein the region has a surface area of 1 mm$^2$ and a thickness of 200 $\mu$m, and wherein the particles have a diameter of greater than about 20 $\mu$m. In some embodiments, the polyester products described herein may have from about 0 to about 100 particles per a region, wherein the particles are counted on a sheet form of the polyester product, wherein the region has a surface area of 1 mm$^2$ and a thickness of 200 $\mu$m, and wherein the particles have a diameter of greater than about 20 $\mu$m.

The polyester products described herein may have less than about 150 particles per a region, wherein the particles are counted on a sheet form of the polyester product, wherein the region has a surface area of 1 mm$^2$ and a thickness of 1 mm, and wherein the particles have a diameter of greater than about 20 $\mu$m. In some embodiments, the polyester products described herein may have from about 0 to about 150 particles per a region, wherein the particles are counted on a sheet form of the polyester product, wherein the region has a surface area of 1 mm$^2$ and a thickness of 1 mm, and wherein the particles have a diameter of greater than about 20 $\mu$m.

The polyester products described herein may have also have one or more of the following color values (in accordance with the CIELAB color scale): Color L (lightness, L*) of from about 40 to about 55, Color A (red-green axis, a*) of from about 0 to about 2, and Color B (blue-yellow axis, b*) of from about 2 to about 6.

**Process of Making Heat-Shrinkable Polyester Films**

Provided in one aspect is a method for manufacturing a heat-shrinkable polyester film comprising:

(a) heating a mixture comprising a dicarboxylic acid component, a diol component, optionally, a modifier component, and recycled material, to a temperature of from about 230°C to about 280°C to undergo esterification and to provide an esterified product;
(b) passing the esterified product through a filter having a pore size of from about 5 $\mu$m to about 20 $\mu$m and at a pressure difference per hour of less than about 0.1 bar per hour;
(c) heating the esterified product in the presence of a catalyst and heat stabilizer to undergo polymerization and to provide a polyester product;
(d) processing the polyester product to provide a polyester resin;
(e) extruding the polyester resin to provide a sheet; and
(f) subjecting the sheet to a film formation process to provide the heat-shrinkable polyester film,

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,

wherein the esterified product has a viscosity of less than about 1500 poise, and

wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

In some embodiments, the mixtures described herein may comprise terephthalic acid (TPA) or dimethyl terephthalate (DMT), ethylene glycol (EG), and a modifier component (e.g., any one of the diol monomers or polyol monomers described herein). In some embodiments, the mixture comprises terephthalic acid (TPA), ethylene glycol (EG), and neopentyl glycol (NPG). In some embodiments, the mixture comprises dimethyl terephthalate (DMT), ethylene glycol (EG), and neopentyl glycol (NPG). In some embodiments, the mixture comprises terephthalic acid (TPA), ethylene glycol (EG), and 2-methyl-1,3-propanediol (MPDO). In some embodiments, the mixture comprises terephthalic acid (TPA), ethylene glycol (EG), and 1,4-cyclohexanedimethanol (CHDM). In some embodiments, the mixture comprises terephthalic acid (TPA), ethylene glycol (EG), neopentyl glycol (NPG), and diethylene glycol (DEG). In some embodiments, the mixture comprises terephthalic acid (TPA), ethylene glycol (EG), 1,4-cyclohexanedimethanol (CHDM), and diethylene glycol (DEG). In some embodiments, the mixture comprises terephthalic acid (TPA), ethylene glycol (EG), neopentyl glycol (NPG), and butanediol.

Provided in one aspect is a method for manufacturing a heat-shrinkable polyester film comprising:

(a) heating a mixture comprising terephthalic acid (TPA) or dimethyl terephthalate (DMT), ethylene glycol (EG), a modifier component, and recycled material, to a temperature of from about 230°C to about 280°C to undergo esterification and to provide an esterified product;
(b) passing the esterified product through a filter having a pore size of from about 5 $\mu$m to about 20 $\mu$m and at a pressure difference per hour of less than about 0.1 bar per hour;
(c) heating the esterified product in the presence of a catalyst and heat stabilizer to undergo polymerization and to provide a polyester product;
(d) processing the polyester product to provide a polyester resin;
(e) extruding the polyester resin to provide a sheet; and
(f) subjecting the sheet to a film formation process to provide the heat-shrinkable polyester film,

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,
wherein the esterified product has a viscosity of less than about 1500 poise, and
wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

Provided in one aspect is a method for manufacturing a heat-shrinkable polyester film comprising:

(a) heating a mixture comprising terephthalic acid, ethylene glycol, neopentyl glycol, and recycled material, to a temperature of from about 230°C to about 280°C to undergo esterification and to provide an esterified product;
(b) passing the esterified product through a filter having a pore size of from about 5 $\mu$m to about 20 $\mu$m and at a pressure difference per hour of less than about 0.1 bar per hour;
(c) heating the esterified product in the presence of a catalyst and heat stabilizer to undergo polymerization and to provide a polyester product;
(d) processing the polyester product to provide a polyester resin;
(e) extruding the polyester resin to provide a sheet; and
(f) subjecting the sheet to a film formation process to provide the heat-shrinkable polyester film,

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,
wherein the esterified product has a viscosity of less than about 1500 poise, and
wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

As used herein the processing in step d) comprises granulating or pelletizing. The methods described herein include embodiments as recited in the preceding paragraph and shown in Option B of FIG.1 (also referred as the "two-stage process"), wherein before extrusion, the polyester products are processed by cooling and granulating to provide the polyester resin compositions (polyester chips). Such processes are referred to as a "two-stage process." For such methods, the polyester resin compositions are further remelted during the extrusion process. In some embodiments, the polyester resin composition in step d) is not cooled to a temperature of from about 10°C to about 80°C. In some embodiments, the polyester resin composition in step d) is not cooled to a temperature of from about 15°C to about 60°C, including from about 20°C to about 30°C.

The methods described herein also include embodiments as shown in Option A of FIG.1 (also referred as the "continuous process"), wherein step d) is not required. That is the polyester product (polyester melt) is not cooled and granulated to provide the polyester resin composition (polyester chips). In such embodiments, the polyester product is subjected to the extruding step to provide the sheet. Such processes wherein step d) is not required are referred to known as a continuous flow process that allow for a seamless film production. Thus, the polyester products (polyester melts) described herein may be directly extruded to provide the polyester sheet.

The washing material may be a single thermoplastic material comprising polypropylene (PP), polyethylene (PE), or polyethylene terephthalate (PET). The washing material is clean and pure from any other materials or impurities). In some embodiments, the washing material is pure polypropylene (PP), pure polyethylene (PE), or pure polyethylene terephthalate (PET). In some embodiments, the washing material is pure polypropylene.

In some embodiments, in step a) the mixture is heated at a temperature of about 230°C to about 280°C, including about 230°C, about 235°C, about 240°C, about 245°C, about 250°C, about 255°C, about 260°C, about 265°C, about 270°C, about 275°C, and about 280°C. In some embodiments, in step a) the mixture is heated at a temperature of about 240°C to about 270°C. In some embodiments, in step a) the mixture is heated at a temperature of about 245°C to about 265°C.

In the methods described herein, in step b) the filter has a pore size of from about 5 $\mu$m to about 20 $\mu$m with a filtration area of about 100 m$^2$ and is operated at a pressure difference per hour of less than about 0.1 bar per hour. The pressure difference per hour is based on using the inlet pressure ($P_{t0}$) at the initial time ($T_0$) and the inlet pressure ($P_{t24}$) after 24 hours ($T_{24}$). In some embodiments, the inlet pressure at the initial time ($P_{t0}$) is less than about 2 bar, preferably less than about 1 bar. In some embodiments, within 24 hours, the pressure rise rate (slope of $P_{t24}$-$P_{t0}$) is less than 0.1 bar per hour. In some embodiments, the pressure difference per hour is less than 0.085 bar per hour. In some embodiments, the pressure difference per hour is from about 0 to about 0.085 bar per hour. In some embodiments, the pressure difference per hour is less than 0.07 bar per hour. In some embodiments, the pressure difference per hour is from about 0 to about 0.07 bar per hour.

In some embodiments, in step c) the esterified product is heated at a temperature of about 240°C to about 290°C, including about 240°C, about 245°C, about 250°C, about 255°C, about 260°C, about 265°C, about 270°C, about 275°C, about 280°C, about 285°C, and about 290°C. In some embodiments, in step c) the esterified product is heated at a temperature of about 250°C to about 280°C. In some embodiments, in step c) the esterified product is heated at a temperature of about 255°C to about 275°C.

In some embodiments, in step c) the polyester product reaches an intrinsic viscosity (IV) of greater than about 0.58 dL/g. In some embodiments, in step c) the polyester product reaches an intrinsic viscosity (IV) of from about 0.58 dL/g to about 0.80 dL/g, including about 0.58 dL/g, about 0.6 dL/g, about 0.65 dL/g, about 0.7 dL/g, about 0.75 dL/g, and about 0.80 dL/g. In some embodiments, in step c) the polyester product reaches an intrinsic viscosity (IV) of from about 0.65 dL/g to about 0.75 dL/g.

In some embodiments, in step c) the polyester product has a viscosity of from about 200 poise to about 1500 poise, including about 200 poise, about 300 poise, about 400 poise, about 500 poise, about 600 poise, about 700 poise, about 800 poise, about 900 poise, about 1000 poise, about 1100 poise, about 1200 poise, about 1300 poise, about 1400 poise, and about 1500 poise. In some embodiments, in step c) the polyester product has a viscosity of from 200 poise to about 1000 poise. In some embodiments, in step c) the polyester product has a viscosity of from about 200 poise to about 800 poise.

In some embodiments, the recycled material has a pressure difference of from about 0.1 bar to about 25 bar, including about 0.1 bar, about 0.5 bar, about 1 bar, about 1.5 bar, about 2 bar, about 2.5 bar, about 3 bar, about 3.5 bar, about 4 bar, about 4.5 bar, about 5 bar, about 5.5 bar, about 6 bar, about 6.5 bar, about 7 bar, about 7.5 bar, about 8 bar, about 8.5 bar, about 9 bar, about 9.5 bar, about 10 bar, about 15 bar, about 20 bar, and about 25 bar.

In some embodiments, in step d) wherein extruding is at a temperature of from about 230°C to about 280°C, including about 230°C, about 235°C, about 240°C, about 245°C, about 250°C, about 255°C, about 260°C, about 265°C, about 270°C, about 275°C, and about 280°C.

**Process of Making Polyester Products**

Provided in one aspect is a method for manufacturing a polyester product comprising:

(a) heating the mixture comprising a dicarboxylic acid component, a diol component, optionally, a modifier component, and recycled material to a temperature of from about 230°C to about 280°C to undergo esterification and to provide an esterified product;
(b) passing the esterified product through a filter having a pore size of from about 5 microns to about 20 microns and at a pressure difference per hour of less than about 0.1 bar per hour; and
(c) heating the esterified product in the presence of a catalyst and heat stabilizer to undergo polymerization and to provide a polyester product;

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,
wherein the esterified product has a viscosity of less than about 1500 poise.

Provided in one aspect is a method for manufacturing a polyester product comprising:

(a) heating the mixture comprising terephthalic acid (TPA) or dimethyl terephthalate (DMT), ethylene glycol (EG), a modifier component, and recycled material to a temperature of from about 230°C to about 280°C to undergo esterification and to provide an esterified product;
(b) passing the esterified product through a filter having a pore size of from about 5 microns to about 20 microns and at a pressure difference per hour of less than about 0.1 bar per hour; and
(c) heating the esterified product in the presence of a catalyst and heat stabilizer to undergo polymerization and to provide a polyester product;

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,
wherein the esterified product has a viscosity of less than about 1500 poise.

Provided in one aspect is a method for manufacturing a polyester product comprising:

(a) heating the mixture comprising a terephthalic acid, ethylene glycol, neopentyl glycol or 2-methyl-1,3-propanediol (MPDO), and recycled material to a temperature of from about 230°C to about 280°C to undergo esterification and to provide an esterified product;

(b) passing the esterified product through a filter having a pore size of from about 5 microns to about 20 microns and at a pressure difference per hour of less than about 0.1 bar per hour; and

(c) heating the esterified product in the presence of a catalyst and heat stabilizer to undergo polymerization and to provide a polyester product;

wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,

wherein the esterified product has a viscosity of less than about 1500 poise.

In some embodiments, the washing material is pure polypropylene (PP), pure polyethylene (PE), or pure polyethylene terephthalate (PET). In some embodiments, the washing material is pure polypropylene.

In some embodiments, in step a) the mixture is heated at a temperature of about 230°C to about 280°C, including about 230°C, about 235°C, about 240°C, about 245°C, about 250°C, about 255°C, about 260°C, about 265°C, about 270°C, about 275°C, and about 280°C. In some embodiments, in step a) the mixture is heated at a temperature of about 240°C to about 270°C. In some embodiments, in step a) the mixture is heated at a temperature of about 245°C to about 265°C.

In some embodiments, in step b), the pressure difference per hour is less than 0.085 per hour. In some embodiments, the pressure difference per hour is less than 0.07 per hour.

In some embodiments, in step c) the esterified product is heated at a temperature of about 240°C to about 290°C, including about 240°C, about 245°C, about 250°C, about 255°C, about 260°C, about 265°C, about 270°C, about 275°C, about 280°C, about 285°C, and about 290°C. In some embodiments, in step c) the esterified product is heated at a temperature of about 250°C to about 280°C. In some embodiments, in step c) the esterified product is heated at a temperature of about 255°C to about 275°C.

In some embodiments, in step c) the polyester product reaches an intrinsic viscosity (IV) of greater than about 0.58 dL/g. In some embodiments, in step c) the polyester product reaches an intrinsic viscosity (IV) of from about 0.58 dL/g to about 0.80 dL/g, including about 0.58 dL/g, about 0.6 dL/g, about 0.65 dL/g, about 0.7 dL/g, about 0.75 dL/g, and about 0.80 dL/g. In some embodiments, in step c) the polyester product reaches an intrinsic viscosity (IV) of from about 0.65 dL/g to about 0.75 dL/g.

In some embodiments, in step c) the polyester product has a viscosity of from about 200 poise to about 1500 poise, including about 200 poise, about 300 poise, about 400 poise, about 500 poise, about 600 poise, about 700 poise, about 800 poise, about 900 poise, about 1000 poise, about 1100 poise, about 1200 poise, about 1300 poise, about 1400 poise, and about 1500 poise. In some embodiments, in step c) the polyester product has a viscosity of from 200 poise to about 1000 poise. In some embodiments, in step c) the polyester product has a viscosity of from about 200 poise to about 800 poise.

In some embodiments, the recycled material has a pressure difference of from about 0.1 bar to about 25 bar, including about 0.1 bar, about 0.5 bar, about 1 bar, about 1.5 bar, about 2 bar, about 2.5 bar, about 3 bar, about 3.5 bar, about 4 bar, about 4.5 bar, about 5 bar, about 5.5 bar, about 6 bar, about 6.5 bar, about 7 bar, about 7.5 bar, about 8 bar, about 8.5 bar, about 9 bar, about 9.5 bar, about 10 bar, about 15 bar, about 20 bar, and about 25 bar.

## Definitions

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

**Test Procedures**

*Intrinsic viscosity (unit: dL/g):* The intrinsic viscosity is determined in accordance with ASTM D4603 (2003 edition) standard test method for determining the intrinsic viscosity of polyethylene terephthalate using a glass capillary viscometer. $0.25 \pm 0.0025$ grams of the sample is measured into 25 mL of solvent (containing 60 wt% phenol and 40 wt% 1,1,2,2-tetrachloroethane) to form a mixed solution. Next, the mixed solution is heated at $110 \pm 10°C$ for about 1 hour and then cooled to form a sample to be tested. The sample to be tested is measured using an Ostwald viscometer at 25°C, and the intrinsic viscosity is calculated using the Huggins equation.

*Neopentyl glycol in total glycol molar percentage (unit: mol%):* The neopentyl glycol molar percentage is determined by $^1$H NMR. For example, 15 mg of the sample is added to a bottle followed by 0.4 mL of a solvent (volume ratio of $CDCl_3$:CF3COOD is 3:1) to dissolve the sample to provide a solution. The solution is then transferred to a nuclear magnetic resonance tube for testing.

*Acid value (unit: eq/t):* The acid value is determined by first accurately weighing 2-4 grams of the sample and recording the sample weight as W (g). The sample and 25 mL of a mixed solution (phenol in a weight ratio of 3:2) are added to a 100 mL glass sample bottle. The bottle is sealed and heated at 150°C for 20 minutes to ensure complete dissolution of the sample. The solution is then allowed to cool to room temperature. 3-5 drops of bromophenol blue indicator is added to the cooled solution followed by stirring. The solution is titrated with 0.1N KOH-benzyl alcohol standard solution until the color changes from yellow to blue, indicating the titration endpoint. The volume of the standard titrant used is recorded as V (mL). A blank test is performed using the same procedure (without the sample, using only 25 mL of the mixed solution), and the volume of the standard titrant used is recorded as V0 (mL).

The acid value (eq/t) is calculated using the following formula:

$$\frac{(V-V0) \text{x } 0.1 \text{ x } 1000}{W}.$$

*Gloss (unit: GU):* The heat-shrinkable polyester film is cut into a size of 10 cm (MD) x 10 cm (TD). The 60° gloss is measured using a gloss meter (Japan Nippon Denshoku, model: VG-2000) according to ASTM D523 (2018 edition). Measurements are taken five times, and the average value is calculated.

*Haze (unit: %):* The heat-shrinkable polyester film is cut into a size of 10 cm (MD) x 10 cm (TD). Haze is measured using a haze meter (Japan Nippon Denshoku, model: NDH-2000) according to ASTM D1003 (2021 edition). Measurements are taken five times, and the average value is calculated.

*Total light transmittance (unit: %):* The heat-shrinkable polyester film is cut into a size of 10 cm (MD) x 10 cm (TD). Total light transmittance is measured by using a haze meter (Japan Nippon Denshoku, model: NDH-2000) according to ASTM D1003 (2021 edition). Measurements are taken five times, and the average value is calculated.

*Particle content:* The particle content is measured using an optical microscope (available from OLYMPUS Corporation) with a magnification of 50 times. The image is captured into an image analyzer (available from Media Cybernetics) via a CCD camera and subjected to image analysis. The measurements are conducted 5 times, varying the visual field each time, and the average number of particles measuring greater than or equal to 20 $\mu$m per 1 mm$^2$ of the visual field area is calculated. In the case of measuring a sheet, the result is taken as the number of contaminants in the copolymerized polyester resin. In the case of measuring a film, the result is taken as the number of contaminants in the polyester film.

*Differential of back pressure (Delta P from filter test):* The back pressure is measured using a filter test machine (Thailand Labtech Engineering, model: LFT34-GP with 20mm Extruder (LE20-30/C)) installed with a filter having a pore size of 14$\mu$m and a diameter of 33.8mm. 1kg of recycled material is prepared as the test subject, along with a suitable washing material.

A preferred washing material should meet the following requirements:

1. have sufficient fluidity in the molten state, yet thick enough to wash away residual testing materials or remnant;
2. be pure and free of impurities to prevent additional pressure on the filter caused by impurities; and
3. composed of a single material, not a mixture, to ensure the stability of the baseline pressure.

For example, a suitable washing material may be a single thermoplastic material (e.g., polypropylene (PP), polyethylene (PE), and polyethylene terephthalate (PET)) that is clean and pure from any other materials or impurities. In some embodiments and as discussed in more detail below, PP is used as the washing material.

After heating the filter test machine to 299°C, PP is fed into the machine to wash away residual testing materials or remnants.

After thoroughly washing the machine, the extruder and the pump are closed, the machine is set in accordance with following below parameters, the filter is replaced with a new filter, and the pressure meter is calibrated to zero:

1. A temperature of 299°C;
2. A feeding rate of 60 cubic centimeter (cc) per minute; and
3. A fixed entrance pressure to ensure the stable supply of testing material.

After thoroughly feeding another 500~1000g of PP into the machine, the extruder and the pump are turned on. When the pressure becomes stable, the baseline pressure of PP herein is defined as P1.

When approximately 100g of PP remains, 1kg of recycled material is fed into the machine. When approximately 100g of recycled material remains, another 500g of PP is fed into the machine. After the depletion of the 1kg recycled material, the pressure will gradually return to a stable state, and the stable plateau pressure herein is defined as P2.

As described above, P1 is the baseline pressure of the PP, and P2 is the plateau pressure of the PP after the addition and depletion of about 1 kg of recycled material. By subtracting P2 and P1, the differential of back pressure (Delta P from filter test) (additional pressure caused by the impurities of the recycled material) is measured.

*Benzene content (unit: ppb):* The benzene content is determined by using a headspace gas chromatography with flame ionization detection (HS-GC-FID). 10 grams of the test sample is allowed to equilibrate with liquid nitrogen for 10 minutes, following by grinding it into a powder with a 20-mesh grinder (manufacturer: Wiley Mill). 0.1 mg of the ground sample is weighed into a 20 ml headspace vial and sealed. The sample is analyzed by using a headspace auto sampler (Agilent Headspace Auto Sampler 7697A or equivalent) coupled with an Agilent 7890 or equivalent gas chromatogram (GC) equipped with a 30m length x 0.53mm inner diameter and 1mm film thickness GS-Gas column (Restek RTX-1) with FID. The headspace heating zone is maintained at 200°C, with a headspace loop and transfer line at 210°C and 210°C, respectively. The carrier gas is hydrogen with a flow rate of 21.6 mL/min. The oven is programmed with an initial temperature of 40°C for 2 min followed by an increase of 50°C/min to 95°C, an increase at 1°C/min to 100°C, and finally an increase at 100°C/min to 290°C. The injector is set at 250°C. The FID detector is set at 325°C. The FID hydrogen flow rate is 30 mL/min, the air flow rate is 280 mL/min, and nitrogen makeup gas flow rate is 25 mL/min. GC ChemStation (Agilent Technologies, Rev A.10.02) is used for signal acquisition and peak integration.

*TD and MD shrinkage (unit: %)*: The TD and MD shrinkage are determined according to the JIS Z1709 standard method. For example, a heat-shrinkable polyester film is cut into a size of 10 cm $\times$ 10 cm, placed in 95°C hot water for 10 seconds. The length of TD (perpendicular to the machine direction) and the length of MD (machine direction) are recorded. The shrinkage is calculated with the following formula: where L0 is the original length of the heat-shrinkable polyester film (which is 10 cm), and L is the length after being placed in 95°C hot water for 10 seconds.

$$\text{Shrinkage } (\%) = [(L0\text{-}L)/L0] \times 100\%$$

*TD shrink force (unit: MPa):* The TD shrink force is determined by using a Labthink C631H Thermal Shrinkage Tester (according to ISO 14616-1997). The heat-shrinkable polyester film is cut into a strip shape having a size of 110 mm (TD) x 15mm (MD). The shrink force measurements are conducted at 170°C and held in the heating chamber for 90 seconds. The maximum shrink force value of each film is measured as "TD shrink force".

*Dynamic viscosity (unit: poise):* Dynamic viscosity is measured by using a Real Time Rheometer (Germany GÖTTFERT Werkstoff-Prüfmaschinen, model: RTR).

*Coefficient of friction:* The film to film coefficient of friction (COF) is measured in accordance with ASTM D1894.

*Color measurement of copolymerized polyester resin:* By using a Spectrophotometer (Japan Nippon Denshoku, model: SD4000), the color difference (L, a, b) of a chip of the copolymerized polyester resin is measured.

*Filter life measurement:* Specific criteria for determining filter life are: (1) $P_{t0}$ is less than 2 bar at $T_0$, and (2) the filter's pressure rise rate (slope of $P_{t24}$-$P_{t0}$) is less than 0.1 bar per hour. The observations are classified as follows:

· O: Good filter performance and suggesting a longer filter life - if both (1) and (2) are true.

· X: Undesirable filter performance and suggesting a short filter life - if either (1) or (2) is not true.

The present invention, thus generally described, will be understood more readily by reference to the following examples, which are provided by way of illustration and are not intended to be limiting of the present invention.

**EXAMPLES**

**PCR1 -** P1: The recycled bottle (flakes) were melted and extruded and then granulated. The intrinsic viscosity was 0.60 dL/g and contained a benzene concentration of 549 ppb and a Delta P from filter test of 5 bar.

**PCR2 -** P2: The recycled bottle (flakes) were melted and extruded and then granulated. The intrinsic viscosity was 0.60 dL/g and contained a benzene concentration of 1589 ppb and a Delta P from filter test of 56 bar.

**PCR3 -** P3: The recycled bottle (flakes) were melted and extruded and then granulated. The intrinsic viscosity was 0.64 dL/g and contained a benzene concentration of 3517 ppb and a Delta P from filter test of 124 bar.

**Example 1** (22 mol% NPG modified PET resin that contained 10 wt% P1) - P4:

2213 kg/hr (100 mol%) of TPA, 687 kg/hr (75.5 mol%) of EG, and 374 kg/hr (24.5 mol%) of NPG were added to the reactor to form a mixture. The mixture in the reactor was heated to 250°C and evenly mixed, and then 300 kg/hr (10wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P4 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 10 wt%. The particle content in the film was measured using an optical microscope.

**Example 2** (22 mol% NPG modified PET resin that contained 10 wt% P1) - P5:

2213 kg/hr (100 mol%) of TPA, 687 kg/hr (75.5 mol%) of EG, and 374 kg/hr (24.5 mol%) of NPG were added to the reactor to form a mixture. The mixture in the reactor was heated to 250°C and evenly mixed, and then 300 kg/hr (10wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P5 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of polyester recycled material in the obtained polyester film was 10 wt%. The particle content in the film was measured using an optical microscope.

**Example 3** (22 mol% NPG modified PET resin that contained 30 wt% P1) - P6:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.
An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.
The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.
The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.
After the prepared P6 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Example 4** (22 mol% NPG modified PET resin that contained 30 wt% P1) - P7:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.
An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.
The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.
The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.
After the prepared P7 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of polyester recycled material in the obtained polyester film was 30 wt%. The particle content in the film was measured using an optical microscope.

**Example 5** (22 mol% NPG modified PET resin that contained 50 wt% P1) - P8:

1178 kg/hr (100 mol%) of TPA, 262 kg/hr (54 mol%) of EG, and 374 kg/hr (46 mol%) of NPG were added to the reactor to form a mixture. The mixture in the reactor was heated to 250°C and evenly mixed, and then 1500 kg/hr (50wt%) of P1 was added to the mixture.
An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.
The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P8 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

Example 6 (22 mol% NPG modified PET resin that contained 50 wt% P1) - P9:

1178 kg/hr (100 mol%) of TPA, 262 kg/hr (54 mol%) of EG, and 374 kg/hr (46 mol%) of NPG were added to the reactor to form a mixture. The mixture in the reactor was heated to 250°C and evenly mixed, and then 1500 kg/hr (50wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P9 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of polyester recycled material in the obtained polyester film was 50 wt%. The particle content in the film was measured using an optical microscope.

Example 7 (16 mol% NPG modified PET resin that contained 50 wt% P1) - P10:

1209 kg/hr (100 mol%) of TPA, 333 kg/hr (67 mol%) of EG, and 275 kg/hr (33 mol%) of NPG were added to the reactor to form a mixture. The mixture in the reactor was heated to 250°C and evenly mixed, and then 1500 kg/hr (50wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 16 mol%, and the intrinsic viscosity was 0.68 dL/g.

After the prepared P10 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Example 8** (22 mol% NPG modified PET resin that contained 30 wt% P1) - P11:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 15 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P11 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Example 9** (22 mol% NPG modified PET resin that contained 30 wt% P1) - P12:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 15 $\mu$m with a filtration area of 100m$^2$ using a melting pump. The filtered esterified product was used in the polymerization process.

The polymerization was performed under vacuum at 285°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.71 dL/g.

After the prepared P12 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Example 10** (22 mol% NPG modified PET resin that contained 30 wt% P1) - P13:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 247°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 247°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P13 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Example 11** (28 mol% NPG modified PET resin that contained 50 wt% P1) - P14:

1147 kg/hr (100 mol%) of TPA, 206 kg/hr (43 mol%) of EG, and 450 kg/hr (57 mol%) of NPG were added to the reactor to form a mixture. The mixture in the reactor was heated to 250°C and evenly mixed, and then 1500 kg/hr (50 wt%) of P1 was added to the mixture.

An esterification reaction was performed under a nitrogen environment at 258°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 258°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 28 mol%, and the intrinsic viscosity was 0.67 dL/g.

After the prepared P14 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Example 12** (33 mol% NPG modified PET resin that contained 50 wt% P1) - P15:

1122 kg/hr (100 mol%) of TPA, 151 kg/hr 33 mol%) of EG, and 525 kg/hr (67 mol%) of NPG were added to the reactor to form a mixture. The mixture in the reactor was heated to 250°C and evenly mixed, and then 1500 kg/hr (50 wt%) of P1 was added to the mixture.

An esterification reaction was performed under a nitrogen environment at 258°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 258°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 274°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 33 mol%, and the intrinsic viscosity was 0.68 dL/g.

After the prepared P15 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Example 13** (25 mol% MPDO modified PET resin that contained 30 wt% P1) - P16:

1205 kg/hr (100 mol%) of TPA, 252 kg/hr (51 mol%) of EG, and 356 kg/hr (49 mol%) of 2-methyl-1,3-propanediol (MPDO) were added to the reactor to form a mixture. The mixture in the reactor was heated to 250°C and evenly mixed, and then 1500 kg/hr (50 wt%) of P1 was added to the mixture.

An esterification reaction was performed under a nitrogen environment at 258°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 258°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 274°C. After the intrinsic viscosity (IV) of the reactant reached 0.5~0.7 dL/g, the reactant was granulated through a granulator to obtain MPDO-modified PET resin. The glass transition temperature of MPDO-modified PET resin was 69°C. According to NMR analysis, the actual molar percentage of 2-methyl-1,3-propanediol in the total glycol-modified mass was 25 mol%, and the intrinsic viscosity was 0.65 dL/g.

After the prepared P16 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Comparative Example 1** (22 mol% NPG modified PET resin that contained 30 wt% P1) - P17:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 40 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.67 dL/g.

After the prepared P17 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Comparative Example 2** (22 mol% NPG modified PET resin that contained 30 wt% P1) - P18:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 240°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 240°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 285°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g.

After the prepared P18 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

**Comparative Example 3** (22 mol% NPG modified PET resin that contained 50 wt% P1) - P19:

1178 kg/hr (100 mol%) of TPA, 262 kg/hr (54 mol%) of EG, and 374 kg/hr (46 mol%) of NPG were added to the reactor to form a mixture. The mixture in the reactor was heated to 250°C and evenly mixed, and then 1500 kg/hr (50wt%) of P1 was added to the mixture.

An esterification reaction was performed under a nitrogen environment at 239°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 239°C was passed through a dynamic viscosity meter and injected through a candle-type filter having a pore size of 20 $\mu$m with a filtration area of $100m^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.69 dL/g.

After the prepared P19 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Comparative Example 4** (22 mol% NPG modified PET resin that contained 50 wt% P2) - P20:

1178 kg/hr (100 mol%) of TPA, 262 kg/hr (54 mol%) of EG, and 374 kg/hr (46 mol%) of NPG were added to the reactor to form a mixture. The mixture in the reactor was heated to 250°C and evenly mixed, and then 1500 kg/hr (50wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of $100m^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.67 dL/g.

After the prepared P20 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 50 wt%. The particle content in the film was measured using an optical microscope.

**Comparative Example 5** (22 mol% NPG modified PET resin that contained 30 wt% P3) - P21:

1697 kg/hr (100 mol%) of TPA, 474 kg/hr (68 mol%) of EG, and 374kg/hr (32 mol%) of NPG were added to the reactor to form a mixture. The mixture in the reactor was heated to 250°C and evenly mixed, and then 900 kg/hr (30wt%) of P1 was added to the mixture.

An esterification reaction was performed under a nitrogen environment at 256°C while the generated water steam was distilled off. When the amount of water distilled reached the theoretical value of complete esterification, 340 ppm of antimony ethylene glycol and 100 ppm of trimethyl phosphate was added to the reactor.

The esterified product with a temperature of 256°C was passed through a dynamic viscosity meter and injected through a candle-type filter having a pore size of 20 $\mu$m with a filtration area of 100m$^2$ using a melting pump. The filtered esterified product was used in the polymerization process.

The polymerization was performed under vacuum at 275°C. After the intrinsic viscosity (IV) of the reactant reached 0.5~0.7 dL/g, the reactant was granulated through a granulator to obtain NPG-modified PET resin. The glass transition temperature of NPG-modified PET resin was 76°C. According to NMR analysis, the actual molar percentage of neopentyl glycol in the total glycol-modified mass was 22 mol%, and the intrinsic viscosity was 0.67 dL/g.

After the prepared P21 resin was added to the twin-screw extruder, the resin was melted, extruded at a temperature of 250°C, extruded through a T-die, and cast onto a chilled roller to obtain a 200 microns sheet. The particle content in the sheet was measured using an optical microscope. The sheet was passed through a film stretching machine to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of polyester recycled material in the obtained polyester film was 30 wt%. The particle content in the film was measured using an optical microscope.

The below tables summarize the preparation parameters and following properties determined for the films of Example 1-13 and Comparative Examples 1-5. The properties were determined in accordance with the protocols and methods described in herein.

| No. | Recycled Material Content (wt%) | Delta P of PCR Chip by 100% flake @ 14 um filter (bar) | Esterification temp. (°C) | Dynamic Viscosity (poise) | Filter Pore size ($\mu$m) | $P_{t0}$ (bar) | $P_{t24}$ (bar) | $\Delta P^1$ (bar) | slope of $\Delta P^1$ (bar/hr) |
|---|---|---|---|---|---|---|---|---|---|
| Ex. 1 | 10% | 5 | 256 | 387 | 20 | 0.1 | 0.6 | 0.5 | 0.021 |
| Ex. 2 | 10% | 5 | 256 | 387 | 20 | 0.1 | 0.6 | 0.5 | 0.021 |
| Ex. 3 | 30% | 5 | 256 | 425 | 20 | 0.1 | 0.8 | 0.7 | 0.029 |
| Ex. 4 | 30% | 5 | 256 | 425 | 20 | 0.1 | 0.8 | 0.7 | 0.029 |
| Ex. 5 | 50% | 5 | 256 | 439 | 20 | 0.1 | 1.6 | 1.5 | 0.063 |
| Ex. 6 | 50% | 5 | 256 | 439 | 20 | 0.1 | 1.6 | 1.5 | 0.063 |
| Ex. 7 | 50% | 5 | 256 | 439 | 20 | 0.1 | 1.6 | 1.5 | 0.063 |
| Ex. 8 | 30% | 5 | 256 | 394 | 15 | 0.1 | 1.6 | 1.5 | 0.063 |
| Ex. 9 | 30% | 5 | 256 | 394 | 15 | 0.1 | 1.7 | 1.6 | 0.067 |
| Ex. 10 | 30% | 5 | 247 | 700 | 20 | 1.3 | 2.6 | 1.3 | 0.054 |
| Ex. 11 | 50% | 5 | 258 | 448 | 20 | 0.1 | 1.6 | 1.5 | 0.063 |
| Ex. 12 | 50% | 5 | 258 | 461 | 20 | 0.1 | 1.7 | 1.6 | 0.067 |
| Ex. 13 | 50% | 5 | 258 | 450 | 20 | 0.1 | 1.4 | 1.3 | 0.054 |
| C. Ex. 1 | 30% | 5 | 256 | 381 | 40 | 0.1 | 0.6 | 0.5 | 0.021 |
| C. Ex. 2 | 30% | 5 | 240 | 1911 | 20 | 2.8 | 5.3 | 2.5 | 0.104 |
| C. Ex. 3 | 50% | 5 | 239 | 1987 | 20 | 3.1 | 5.9 | 2.8 | 0.117 |

(continued)

| No. | Recycled Material Content (wt%) | Delta P of PCR Chip by 100% flake @ 14 um filter (bar) | Esterification temp. (°C) | Dynamic Viscosity (poise) | Filter Pore size (μm) | $P_{t0}$ (bar) | $P_{t24}$ (bar) | $\Delta P^1$ (bar) | slope of $\Delta P^1$ (bar/hr) |
|---|---|---|---|---|---|---|---|---|---|
| C. Ex. 4 | 50% | 56 | 256 | 451 | 20 | 0.1 | 5.6 | 5.5 | 0.229 |
| C. Ex. 5 | 30% | 124 | 256 | 451 | 20 | 0.1 | 9.0 | 8.9 | 0.371 |
| = $\Delta P$ is $P_{t24}$-$P_{t0}$. | | | | | | | | | |

| No. | Filter life | Polymerization temp. (°C) | Polymer IV (dl/g) | Extrusion temp. (°C) | TDO temp. (°C) | NPG Content (mol%) | TD at 95°C for 10s (%) | MD at 95°C for 10s (%) | TD shrink force at 170°C (MPa) |
|---|---|---|---|---|---|---|---|---|---|
| Ex. 1 | O | 275 | 0.68 | 250 | 98/85/73 | 22% | 76.8 | 0.9 | 12.1 |
| Ex. 2 | O | 275 | 0.68 | 250 | 98/87/87 | 22% | 67.5 | 0.8 | 9.9 |
| Ex. 3 | O | 275 | 0.68 | 250 | 98/85/73 | 22% | 78.1 | 1.8 | 12.8 |
| Ex. 4 | O | 275 | 0.68 | 250 | 98/87/87 | 22% | 68.8 | 1.6 | 9.3 |
| Ex. 5 | O | 275 | 0.68 | 250 | 98/85/73 | 22% | 77.2 | 1.2 | 11.0 |
| Ex. 6 | O | 275 | 0.68 | 250 | 98/87/87 | 22% | 68.7 | 0.8 | 9.4 |
| Ex. 7 | O | 275 | 0.68 | 250 | 98/85/73 | 16% | 71.5 | 2.5 | 11.1 |
| Ex. 8 | O | 275 | 0.68 | 250 | 98/85/73 | 22% | 77.1 | 0.7 | 12.3 |
| Ex. 9 | O | 285 | 0.71 | 250 | 98/85/73 | 22% | 77.0 | 0.9 | 12.1 |
| Ex. 10 | O | 275 | 0.68 | 250 | 98/85/73 | 22% | 76.6 | 1.0 | 12.5 |
| Ex. 11 | O | 275 | 0.67 | 250 | 98/85/73 | 28% | 78% | 0.5 | 12.1 |
| Ex. 12 | O | 274 | 0.67 | 250 | 98/85/73 | 33% | 78% | 0.2 | 12.5 |
| Ex. 13 | O | 274 | 0.65 | 250 | 91/78/66 | 25%* | 76.7% | 0.8 | 10.9 |
| C. Ex. 1 | O | 275 | 0.67 | 250 | 98/85/73 | 22% | 76.9 | 0.8 | 12.8 |
| C. Ex. 2 | X | 285 | 0.68 | 250 | 98/85/73 | 22% | 76.8 | 0.6 | 11.9 |
| C. Ex. 3 | X | 275 | 0.69 | 250 | 98/85/73 | 22% | 77.2 | 0.7 | 12.1 |

(continued)

| No. | Filter life | Polymerization temp. (°C) | Polymer IV (dl/g) | Extrusion temp. (°C) | TDO temp. (°C) | NPG Content (mol%) | TD at 95°C for 10s (%) | MD at 95°C for 10s (%) | TD shrink force at 170°C (MPa) |
|---|---|---|---|---|---|---|---|---|---|
| C. Ex. 4 | X | 275 | 0.67 | 250 | 98/85/73 | 22% | 77.5 | 1.9 | 11.8 |
| C. Ex. 5 | X | 275 | 0.67 | 250 | 98/85/73 | 22% | 77.0 | 0.9 | 12.4 |
| *NPG has been replaced with MPDO. | | | | | | | | | |

| No. | Number of particles (>20μm) within 1mm² x 40μm | Film IV (dl/g) | Benzene Content (ppb) | Acid value (eq/t) | Coefficient of Friction | Gloss (GU) | Haze (%) | T.T. (%) |
|---|---|---|---|---|---|---|---|---|
| Ex. 1 | 0 | 0.65 | <5 | 21 | 0.37 | 153 | 2.9 | 92 |
| Ex. 2 | 1 | 0.65 | <5 | 21 | 0.39 | 148 | 2.5 | 93 |
| Ex. 3 | 4 | 0.65 | 18 | 23 | 0.38 | 149 | 3.1 | 92 |
| Ex. 4 | 4 | 0.65 | 28 | 23 | 0.40 | 145 | 3.2 | 93 |
| Ex. 5 | 8 | 0.64 | 65 | 28 | 0.37 | 146 | 3.6 | 91 |
| Ex. 6 | 8 | 0.64 | 62 | 27 | 0.39 | 142 | 3.7 | 92 |
| Ex. 7 | 9 | 0.65 | 49 | 25 | 0.40 | 148 | 3.5 | 92 |
| Ex.8 | 1 | 0.65 | 20 | 21 | 0.37 | 149 | 3.1 | 94 |
| Ex. 9 | 2 | 0.68 | 19 | 22 | 0.38 | 148 | 3.1 | 93 |
| Ex. 10 | 5 | 0.65 | 22 | 20 | 0.39 | 148 | 3.2 | 93 |
| Ex. 11 | 8 | 0.64 | 25 | 22 | 0.41 | 151 | 2.6 | 92 |
| Ex. 12 | 10 | 0.64 | 33 | 27 | 0.40 | 152 | 2.4 | 91 |
| Ex. 13 | 9 | 0.63 | 21 | 24 | 0.40 | 148 | 3.2 | 91 |
| C. Ex. 1 | 78 | 0.64 | 19 | 21 | 0.42 | 146 | 4.6 | 86 |
| C. Ex. 2 | 5 | 0.64 | 22 | 20 | 0.41 | 147 | 3.2 | 92 |
| C. Ex. 3 | 9 | 0.65 | 59 | 23 | 0.40 | 149 | 3.2 | 93 |
| C. Ex. 4 | 31 | 0.65 | 72 | 30 | 0.41 | 142 | 4.1 | 90 |
| C. Ex. 5 | 54 | 0.63 | 98 | 31 | 0.42 | 146 | 4.3 | 88 |

The below tables summarize the following properties determined for the polyester products of Example 1-13 and Comparative Examples 1-5. The properties were determined in accordance with the protocols and methods described in herein.

| No. | Recycled Material Content (wt%) | NPG Content (mol%) | Number of particles (>20μm) within 1mm² X 200μm | Resin IV (dl/g) | Benzene Content (ppb) | Acid value (eq/t) | Color L | Color La | Color Lb |
|---|---|---|---|---|---|---|---|---|---|
| Ex. 1 | 10% | 22% | 0 | 0.68 | 1 | 21 | 51.1 | 0.5 | 4.8 |
| Ex. 2 | 10% | 22% | 9 | 0.68 | 1 | 21 | 50.8 | 0.4 | 5.1 |
| Ex. 3 | 30% | 22% | 21 | 0.68 | 15 | 23 | 46.7 | 1.1 | 9.8 |
| Ex. 4 | 30% | 22% | 23 | 0.68 | 20 | 23 | 45.9 | 1.2 | 9.1 |
| Ex. 5 | 50% | 22% | 46 | 0.68 | 45 | 28 | 40.9 | 1.7 | 14.5 |
| Ex. 6 | 50% | 22% | 49 | 0.68 | 41 | 27 | 40.1 | 1.6 | 15.7 |
| Ex. 7 | 50% | 16% | 51 | 0.68 | 49 | 25 | 40.3 | 1.8 | 15.4 |
| Ex. 8 | 30% | 22% | 7 | 0.68 | 19 | 21 | 45.8 | 0.9 | 9.7 |
| Ex. 9 | 30% | 22% | 29 | 0.71 | 21 | 22 | 46.8 | 1.0 | 13.1 |
| Ex. 10 | 30% | 22% | 41 | 0.68 | 15 | 20 | 47.1 | 0.9 | 8.9 |
| Ex. 11 | 50% | 28% | ND | 0.64 | 25 | 22 | 39.3 | 0.1 | 16.7 |
| Ex. 12 | 50% | 33% | ND | 0.64 | 33 | 27 | 38.7 | 0.9 | 17.2 |
| Ex. 13 | 50% | 25%* | ND | 0.64 | 21 | 24 | 40.9 | 0.6 | 15.9 |
| C. Ex. 1 | 30% | 22% | 493 | 0.67 | 22 | 21 | 46.9 | 1.2 | 9.1 |
| C. Ex. 2 | 30% | 22% | 31 | 0.68 | 24 | 20 | 47.8 | 0.9 | 8.8 |
| C. Ex. 3 | 50% | 22% | 67 | 0.69 | 51 | 23 | 41.5 | 1.8 | 14.1 |
| C. Ex .4 | 50% | 22% | 184 | 0.67 | 62 | 30 | 38.4 | 1.8 | 17.3 |
| C. Ex. 5 | 30% | 22% | 328 | 0.67 | 84 | 31 | 35.2 | 1.9 | 18.1 |

*NPG has been replaced with MPDO.
ND = not determined.

| No. | Number of particles (>20μm) within 1mm² x 1 mm |
|---|---|
| Ex. 1 | 0 |
| Ex. 2 | 18 |
| Ex. 3 | 62 |
| Ex. 4 | 58 |
| Ex. 5 | 98 |
| Ex. 6 | 95 |
| Ex. 7 | 143 |
| Ex. 8 | 21 |
| Ex. 9 | 36 |
| Ex. 10 | 89 |
| Ex. 11 | 109 |
| Ex. 12 | 116 |
| Ex. 13 | 112 |
| C. Ex. 1 | 982 |

(continued)

| No. | Number of particles (>20μm) within 1mm² x 1 mm |
|---|---|
| C. Ex. 2 | 93 |
| C. Ex. 3 | 161 |
| C. Ex .4 | 632 |
| C. Ex. 5 | 791 |

**Example A** (25 mol% NPG modified PET resin that contains 50 wt% P1) - P22:

1376 kg/hr (100 mol%) of dimethyl terephthalate, 525 kg/hr (65 mol%) of EG, 478 kg/hr (35 mol%) of NPG, and 500 ppm of manganese(II) acetate are added to the reactor to form a mixture. The mixture in the reactor is heated to 250°C and evenly mixed, and then 1500 kg/hr (50 wt%) of P1 is added to the mixture.

An esterification reaction is performed under a nitrogen environment at 258°C while the generated water steam was distilled off. When the amount of water distilled reaches the theoretical value of complete esterification, 340 ppm of antimony ethylene glycol and 100 ppm of trimethyl phosphate are added to the reactor.

The esterified product with a temperature of 258°C is passed through a dynamic viscosity meter and injected through a candle-type filter having a pore size of 20 μm with a filtration area of 100m² using a melting pump. The filtered esterified product is used in the polymerization process.

The polymerization may be performed under vacuum at 274°C. After the intrinsic viscosity (IV) of the reactant reached 0.5~0.7 dL/g, the reactant is granulated through a granulator to obtain NPG-modified PET resin. The glass transition temperature of NPG-modified PET resin is determined. By using NMR analysis, the actual molar percentage of neopentyl glycol in the total glycol-modified mass (mol%) and the intrinsic viscosity (dL/g) are determined.

This P22 resin may then be added to the twin-screw extruder, melted, extruded at a temperature of 250°C, extruded through a T-die, and cast onto a chilled roller to obtain a 200 microns sheet. The particle content in the sheet may be measured using an optical microscope. The sheet is passed through a film stretching machine to obtain a heat-shrinkable polyester film with a thickness of 40 microns. The following parameters may be used: a preheating temperature of 98°C, a TD stretching temperature of 85°C, a TD stretching of 4.8 times, and an annealing temperature of 73°C. The amount of polyester recycled material in the obtained polyester film may be determined, and the particle content in the film may be measured using an optical microscope.

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

The present disclosure is not to be limited in terms of the particular embodiments described in this application. Many modifications and variations can be made without departing from its spirit and scope, as will be apparent to those skilled in the art. Functionally equivalent methods and compositions within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds, or compositions, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

All publications, patent applications, issued patents, and other documents referred to in this specification are herein incorporated by reference as if each individual publication, patent application, issued patent, or other document was specifically and individually indicated to be incorporated by reference in its entirety. Definitions that are contained in text incorporated by reference are excluded to the extent that they contradict definitions in this disclosure.

Other embodiments are set forth in the following claims.

## Claims

1. A heat-shrinkable polyester film comprising a polyester resin composition comprising:

   (i) terephthalic acid (TPA) or dimethyl terephthalate (DMT)
   (ii) ethylene glycol (EG),
   (iii) a modifier component, and
   (iv) recycled material,

   wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

2. The heat-shrinkable polyester film of claim 1, wherein the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol.

3. The heat-shrinkable polyester film of claims 1 or 2, wherein the modifier component comprises neopentyl glycol, and the polyester resin composition comprises from about 15 mol% to about 40 mol% of neopentyl glycol.

4. The heat-shrinkable polyester film of any one of claims 1-3, wherein the heat-shrinkable polyester film has an intrinsic viscosity of greater than about or equal to about 0.55 dl/g.

5. The heat-shrinkable polyester film of any one of claims 1-4, wherein the heat-shrinkable polyester film has an acid value of from about 15 eq/t to about 40 eq/t.

6. The heat-shrinkable polyester film of any one of claims 1-5, wherein heat-shrinkable polyester film has one or more of the following:

   (i) a coefficient of friction of from about 0.2 to about 0.5,
   (ii) a haze of less than about 10%,
   (iii) a gloss of greater than about 100GU, and
   (iv) a total light transmittance of about 80% to about 95%.

7. The heat-shrinkable polyester film of any one of claims 1-6, wherein the heat-shrinkable polyester film has a shrinkage in the transverse direction of greater than about 55% after immersing the heat-shrinkable polyester film at about 95°C for about 10 seconds and/or wherein the heat-shrinkable polyester film has a shrinkage in the machine direction of less than about 5% after immersing the heat-shrinkable polyester film at about 95°C for about 10 seconds.

8. The heat-shrinkable polyester film of any one of claims 1-7, wherein the recycled material comprises polyethylene terephthalate (PET) recycled material in flake form or chip form.

9. The heat-shrinkable polyester film of any one of claims 1-8, wherein the heat-shrinkable polyester film comprises about 1 wt% to about 80 wt% recycled material, based on a total weight of the heat-shrinkable polyester film and/or wherein the heat-shrinkable polyester film has a benzene content of less than about 500 ppb.

10. A polyester product comprising:

(i) terephthalic acid (TPA) or dimethyl terephthalate (DMT)
(ii) ethylene glycol (EG),
(iii) a modifier component, and
(iv) recycled material.

11. The polyester product of claim 10, wherein the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol.

12. The polyester product of claim 11, wherein the modifier component comprises neopentyl glycol, and the polyester product comprises from about 15 mol% to about 40 mol% of neopentyl glycol.

13. The polyester product of any one of claims 10-12, wherein the polyester product has an intrinsic viscosity of from about 0.58 dl/g to about 0.80 dl/g and/or wherein the polyester product has an acid value of from about 10 eq/t to about 50 eq/t.

14. The polyester product of any one of claims 10-13, wherein the recycled material comprises polyethylene terephthalate (PET) recycled material in flake form or chip form and/or wherein the polyester product comprises about 1 wt% to about 80 wt% recycled material, based on a total weight of the polyester product.

15. A method for manufacturing a heat-shrinkable polyester film comprising:

(a) heating a mixture comprising terephthalic acid (TPA) or dimethyl terephthalate (DMT), ethylene glycol (EG), a modifier component, and recycled material, to a temperature of from about 230°C to about 280°C to undergo esterification and to provide an esterified product;
(b) passing the esterified product through a filter having a pore size of from about 5 $\mu$m to about 20 $\mu$m and at a pressure difference per hour of less than about 0.1 bar per hour;
(c) heating the esterified product in the presence of a catalyst and heat stabilizer to undergo polymerization and to provide a polyester product;
(d) processing the polyester product to provide a polyester resin;
(e) extruding the polyester resin to provide a sheet; and
(f) subjecting the sheet to a film formation process to provide the heat-shrinkable polyester film,
wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,
wherein the esterified product has a viscosity of less than about 1500 poise, and
wherein the heat-shrinkable polyester film has less than or equal to about 10 particles per a region, wherein the region has a surface area of 1 mm$^2$ and a thickness of 40 $\mu$m, and wherein the particles have a diameter of greater than about 20 $\mu$m.

16. A method for manufacturing a polyester product comprising:

(a) heating a mixture comprising terephthalic acid (TPA) or dimethyl terephthalate (DMT), ethylene glycol (EG), a modifier component, and recycled material to a temperature of from about 230°C to about 280°C to undergo esterification and to provide an esterified product;
(b) passing the esterified product through a filter having a pore size of from about 5 microns to about 20 microns and at a pressure difference per hour of less than about 0.1 bar per hour; and
(c) heating the esterified product in the presence of a catalyst and heat stabilizer to undergo polymerization and to provide a polyester product;
wherein the recycled material has a pressure difference of less than 25 bar when applied to the following:

$$P2 - P1,$$

wherein P1 is the baseline pressure of a washing material when the washing material is passed through a 14 micron filter and P2 is the plateau pressure of the washing material after the addition and depletion of about 1 kilogram of recycled material when passed through a 14 micron filter,

wherein the esterified product has a viscosity of less than about 1500 poise.

17. The method of claim 15 or 16, wherein the washing material is pure polypropylene.

18. The method of any one of claims 15-17, wherein in step a) the mixture is heated at a temperature of about 230°C to about 280°C.

19. The method of any one of claims 15-18, wherein in step b) the filter has a pore size of about 5 microns and/or the pressure difference per hour is less than 0.085 per hour.

20. The method of any one of claims 15-19, wherein in step c), one or more of the following:

(i) the esterified product is heated at a temperature of about 240°C to about 290°C,
(ii) the polyester product reaches an intrinsic viscosity (IV) of greater than about 0.58 dL/g, and
(iii) the polyester product has a viscosity of from about 200 poise to about 1500 poise.

21. The method of any one of claims 15-20, wherein the recycled material has a pressure difference of from about 0.1 bar to about 25 bar.

22. The method of any one of claims 15 and 17-21, wherein in step d) wherein processing comprises granulating or pelletizing and/or wherein in step e) wherein extruding is at a temperature of from about 230°C to about 280°C.

23. A polyester product prepared by the method of any one of claims 16-21.

24. A heat-shrinkable polyester film prepared by the method of any one of claims 15 and 17-22.

25. The polyester product of claim 10, wherein the polyester product has less than about 150 particles per a region, wherein the particles are counted on a sheet form of the polyester product, wherein the region has a surface area of 1 $mm^2$ and a thickness of 1 mm, and wherein the particles have a diameter of greater than about 20 $\mu$m.

26. The method of claim 16, wherein the polyester product has less than about 150 particles per a region, wherein the particles are counted on a sheet form of the polyester product, wherein the region has a surface area of 1 $mm^2$ and a thickness of 1 mm, and wherein the particles have a diameter of greater than about 20 $\mu$m.

FIG. 1

EP 4 755 955 A1

Europäisches
Patentamt

European
Patent Office

Office européen
des brevets

# EUROPEAN SEARCH REPORT

**Application Number**

EP 25 22 0384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/253810 A1 (CHANG LI-LING [TW] ET AL) 19 August 2021 (2021-08-19) * paragraphs [0057], [0058], [0060] – [0068]; claims 1-27; examples 1-6; tables 3, 4 * ----- | 1-26 | INV. C08J5/18 B29C48/00 B29C61/00 C08G63/183 C08G63/46 |
| X | EP 4 357 389 A1 (SK CHEMICALS CO LTD [KR]) 24 April 2024 (2024-04-24) * paragraphs [0116], [0132] – [0142], [0151], [0179] – [0186]; claims 1-14; examples 1, 4, 7; tables 1-5 * ----- | 1,2,4-7, 9-11,13, 14,23-25 | C08J11/00 C08J3/00 |
| X | EP 4 122 970 A1 (FAR EASTERN NEW CENTURY CORP [TW]) 25 January 2023 (2023-01-25) * paragraphs [0010] – [0014]; claims 1-24; example 9; tables 4, 8 * ----- | 10-14 | |
| X | US 2022/372217 A1 (HOWELL JR EARL EDMONDSON [US] ET AL) 24 November 2022 (2022-11-24) * paragraphs [0386] – [0403]; claims 1-20; examples 1-16; tables 1-6 * ----- | 1-14, 23-25 | |
| X | JP 2022 055957 A (UNITIKA LTD; NIPPON ESTER CO LTD; UNITIKA TRADING CO LTD) 8 April 2022 (2022-04-08) * paragraphs [0040], [0074] – [0079]; claims 1-4; examples 1-8; table 1 * ----- | 10,11, 13,14, 16-18, 20,23, 25,26 | TECHNICAL FIELDS SEARCHED (IPC) C08J C08G B29C |
| A | EP 4 129 627 A1 (UNITIKA LTD [JP]; NIPPON ESTER CO LTD [JP] ET AL.) 8 February 2023 (2023-02-08) * paragraphs [0029], [0093], [0122] – [0145]; claims 1-11; tables 1, 2 * ----- | 1-26 | |

-/--

The present search report has been drawn up for all claims

| Place of search | Date of completion of the search | Examiner |
|---|---|---|
| Munich | 15 April 2026 | Fischer, Viktor |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALVARADO CHACON FRESIA ET AL: "Effect of recycled content and rPET quality on the properties of PET bottles, part I: Optical and mechanical properties", PACKAGING TECHNOLOGY AND SCIENCE, [Online] vol. 33, no. 9, 12 January 2020 (2020-01-12), pages 347-357, XP093381173, UK ISSN: 0894-3214, DOI: 10.1002/pts.2490 Retrieved from the Internet: URL:https://onlinelibrary.wiley.com/doi/full/10.1002/pts.2490> [retrieved on 2026-03-25] * the whole document * | 1-26 | |
| A | WO 2023/059368 A1 (EASTMAN CHEM CO [US]) 13 April 2023 (2023-04-13) * paragraph [0029]; claims 1-20; examples 1-17 * | 1-26 | |
| | | | TECHNICAL FIELDS SEARCHED (IPC) |

The present search report has been drawn up for all claims

| Place of search | Date of completion of the search | Examiner |
|---|---|---|
| Munich | 15 April 2026 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0384

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| US 2021253810 | A1 | 19-08-2021 | CN | 113265122 A | 17-08-2021 |
| | | | TW | 202132401 A | 01-09-2021 |
| | | | US | 2021253810 A1 | 19-08-2021 |
| EP 4357389 | A1 | 24-04-2024 | CN | 117940480 A | 26-04-2024 |
| | | | EP | 4357389 A1 | 24-04-2024 |
| | | | JP | 7770548 B2 | 14-11-2025 |
| | | | JP | 2024539543 A | 29-10-2024 |
| | | | KR | 20230149644 A | 27-10-2023 |
| | | | TW | 202405072 A | 01-02-2024 |
| | | | US | 2024158568 A1 | 16-05-2024 |
| | | | WO | 2023204561 A1 | 26-10-2023 |
| EP 4122970 | A1 | 25-01-2023 | CN | 115678213 A | 03-02-2023 |
| | | | EP | 4122970 A1 | 25-01-2023 |
| | | | TW | 202305030 A | 01-02-2023 |
| | | | US | 2023039563 A1 | 09-02-2023 |
| US 2022372217 | A1 | 24-11-2022 | CN | 114787233 A | 22-07-2022 |
| | | | EP | 4041797 A1 | 17-08-2022 |
| | | | JP | 7830316 B2 | 16-03-2026 |
| | | | JP | 2022552207 A | 15-12-2022 |
| | | | KR | 20220079916 A | 14-06-2022 |
| | | | US | 2022372217 A1 | 24-11-2022 |
| | | | WO | 2021072020 A1 | 15-04-2021 |
| JP 2022055957 | A | 08-04-2022 | JP | 7644440 B2 | 12-03-2025 |
| | | | JP | 2022055957 A | 08-04-2022 |
| EP 4129627 | A1 | 08-02-2023 | CN | 115605337 A | 13-01-2023 |
| | | | EP | 4129627 A1 | 08-02-2023 |
| | | | JP | 7153259 B2 | 14-10-2022 |
| | | | JP | 2022132684 A | 09-09-2022 |
| | | | JP | 2024166213 A | 28-11-2024 |
| | | | JP | WO2021200754 A1 | 07-10-2021 |
| | | | KR | 20230011919 A | 25-01-2023 |
| | | | TW | 202146247 A | 16-12-2021 |
| | | | US | 2023113079 A1 | 13-04-2023 |
| | | | WO | 2021200754 A1 | 07-10-2021 |
| WO 2023059368 | A1 | 13-04-2023 | CN | 118076665 A | 24-05-2024 |
| | | | EP | 4413060 A1 | 14-08-2024 |
| | | | JP | 2024537184 A | 10-10-2024 |
| | | | KR | 20240067984 A | 17-05-2024 |
| | | | TW | 202315906 A | 16-04-2023 |
| | | | US | 2025011533 A1 | 09-01-2025 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 22 0384

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| | | WO 2023059368 A1 | 13-04-2023 |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63729255